# FASCICULE DE BREVET EUROPEEN

(11) **EP 2 449 634 B1**
(45) Date de publication et mention de la délivrance du brevet: **06.05.2015**
(21) Numéro de dépôt: 10726971.4
(22) Date de dépôt: 24.06.2010
(51) Int. Cl.: H01R 13/639, B60L 11/18

(54) **CONNECTEUR D'ALIMENTATION POUR LA RECHARGE D'UN VÉHICULE ÉLECTRIQUE**
NETZANSCHLUSS ZUM AUFLADEN EINES ELEKTROFAHRZEUGES
POWER CONNECTOR FOR RECHARGING AN ELECTRIC VEHICLE

(30) Priorité: 30.06.2009 FR 0903197
(43) Date de publication de la demande: 09.05.2012
(73) Titulaire: U-Shin France SAS, 94046 Créteil Cedex (FR)
(72) Inventeur: BERNIER, François, F-94042 Creteil (FR)
(74) Mandataire: Cabinet Novitech
(86) Numéro de dépôt international: PCT/EP2010/059010
(87) Numéro de publication internationale: WO 2011/000776

(56) Documents cités:
- EP-A- 0 644 625
- US-B1- 6 225 153

## Description

L'invention concerne les véhicules automobiles à propulsion électrique, qu'ils soient totalement électriques ou de type hybrides, lorsque ces véhicules sont prévus pour subir une recharge de batteries destinées à la propulsion du véhicule.

L'invention concerne plus spécifiquement les connecteurs destinés à une telle recharge, et leur partie embarquée sur le véhicule.

Le document US 6 225 153 décrit un exemple de connecteurs selon l'art antérieur.

De tels connecteurs sont exposés à un certain nombre de contraintes, parmi lesquelles un contrainte de sécurité selon laquelle on souhaite que les connecteurs, outre un maintien fiable en situation de recharge, présentent en outre un verrouillage propre à interdire toute extraction accidentelle ou malveillante de la partie extérieure du connecteur, i.e. en séparation de la partie embarquée du connecteur. C'est notamment le cas lors d'une force d'extraction exercée par un enfant ou en cas d'accrochage accidentel d'un câble de recharge à proximité du véhicule alimenté.

L'invention vise donc à proposer un moyen de verrouillage d'un connecteur de recharge de véhicule automobile en situation d'alimentation, qui permette d'éviter de manière robuste et fiable une désolidarisation intempestive d'un tel connecteur.

Ce but est atteint selon l'invention grâce à une fiche d'alimentation embarquée dans un véhicule automobile pour l'alimentation de batteries de propulsion dudit véhicule automobile, comprenant :
- des contacts exposés à un contactage extérieur,
- des moyens de coopération avec une fiche complémentaire pour ledit contactage extérieur,
- un élément de retenue pour retenir la fiche complémentaire en position d'alimentation du véhicule, ledit élément de retenue étant mobile entre une position effacée où l'élément de retenue autorise un désengagement de ladite fiche complémentaire par rapport au véhicule et une position active où il s'oppose à un désengagement de ladite fiche complémentaire par rapport au véhicule,
- un actionneur pour entraîner l'élément de retenue entre ladite position effacée et ladite position active,
caractérisée en ce que ledit élément de retenue et monté mobile en rotation sur le véhicule et l'actionneur entraîne l'élément de retenue selon le mouvement de rotation lors dudit verrouillage de ladite fiche complémentaire en position d'alimentation du véhicule.

L'invention concerne également un ensemble de connection d'alimentation de véhicule automobile pour l'alimentation de batteries de propulsion dudit véhicule automobile, comprenant une fiche embarquée dans le véhicule automobile pour l'alimentation de batteries de propulsion dudit véhicule automobile et une fiche externe d'alimentation complémentaire de ladite fiche embarquée et destinée à être accouplée à ladite fiche embarquée, ladite fiche embarquée comprenant :
- des contacts exposés à un contactage extérieur,
- des moyens de coopération avec ladite fiche complémentaire pour ledit contactage extérieur,
- un élément de retenue pour retenir ladite fiche complémentaire en position d'alimentation du véhicule, ledit élément de retenue étant mobile entre une position effacée où l'élément de retenue autorise un désengagement de ladite fiche complémentaire par rapport au véhicule et une position active où il s'oppose à un désengagement de ladite fiche complémentaire par rapport au véhicule,
- un actionneur pour entraîner l'élément de retenue entre ladite position effacée et ladite position active, caractérisé en ce que ledit élément de retenue et monté mobile en rotation sur le véhicule et l'actionneur entraîne l'élément de retenue selon le mouvement de rotation lors dudit verrouillage de ladite fiche complémentaire en position d'alimentation du véhicule.

D'autres caractéristiques, buts et avantages de l'invention apparaîtront à la lecture de la description détaillée qui va suivre, faite en référence aux figures annexées sur lesquelles :
- La figure 1 représente une fiche externe pour l'alimentation électrique d'un véhicule électrique, en position enfichée sur le véhicule;

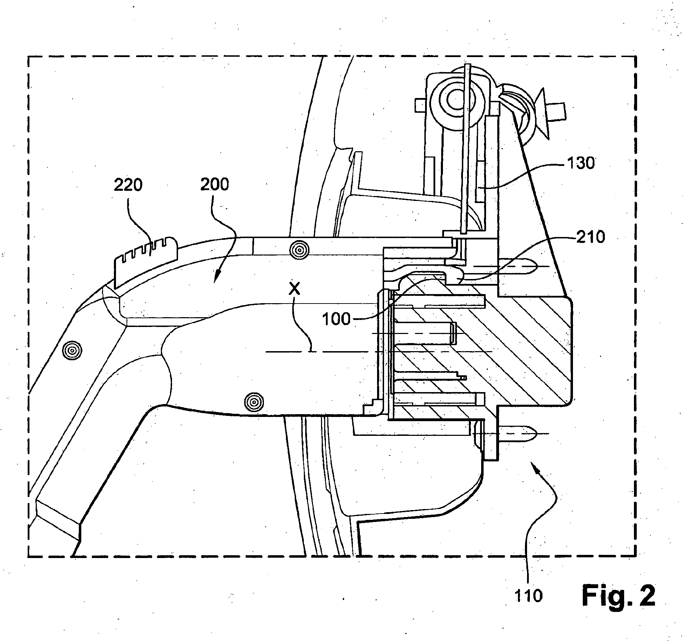

- La figure 2 représente est une vue en perspective d'une fiche embarquée de véhicule automobile, destiné à recevoir la fiche externe de la figure 1 ;

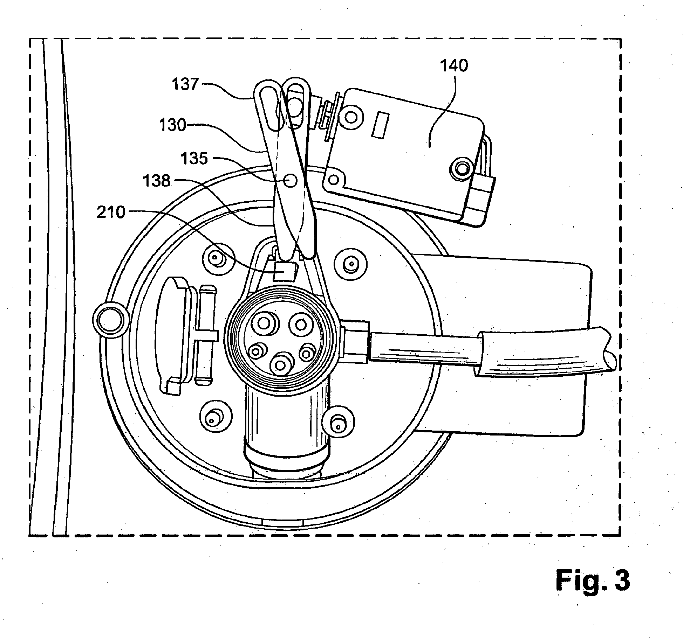

- La figure 3 est une vue en coupe longitudinale de cette même fiche embarquée.

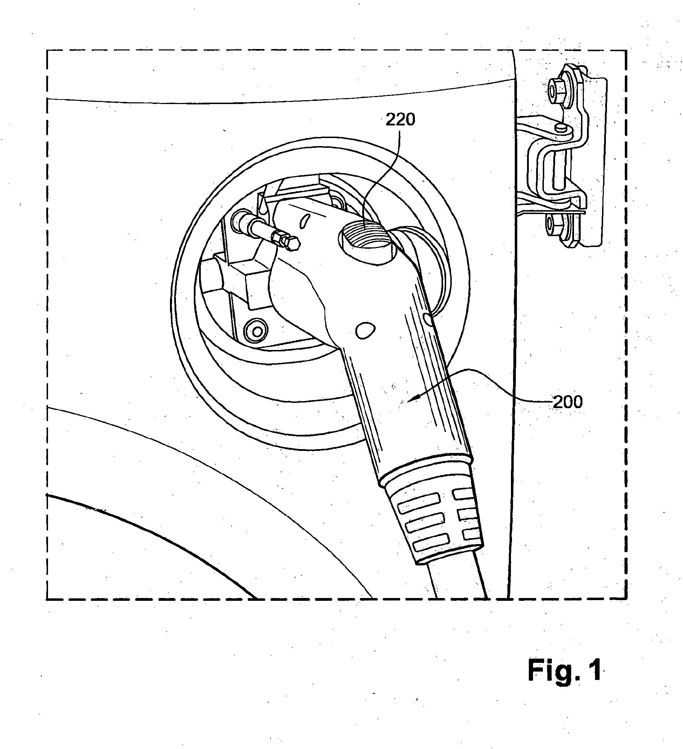

Telle qu'illustrée sur la figure 1, une fiche embarqué 100 de véhicule électrique est placée sur une calandre avant de ce véhicule pour l'alimentation électrique du véhicule lors de la recharge de ce dernier.

La fiche embarquée 100 présente une série de contacts sous la forme de pistes intérieures à la fiche et exposées à un contactage extérieur par insertion de contacts saillants complémentaires.

Une fiche externe 200 est accouplée à cette fiche embarquée, equippée de contacts saillant venant s'insérer contre les pistes intérieures de la fiche embarquée, véhiculant ainsi une énergie électrique de recharge jusqu'à la fiche embarquée, par contactage mutuel entre la fiche externe et la fiche embarquée.

La fiche externe, ou fiche complémentaire à la fiche embarquée, présente ici une configuration d'élément male tandis que la fiche embarquée est un élément femelle. Néanmoins la configuration inverse est également possible, la fiche externe étant une fiche femelle tandis que la fiche embarquée est une fiche mâle.

La fiche embarquée présente des moyens de coopération avec ladite fiche complémentaire, sous la forme d'une jupe enveloppant un corps principal de la fiche complémentaire, lequel corps principal constitue lui-même un moyen de coopération de la fiche externe pour une tenue mécanique entre cette fiche mâle et cette fiche femelle.

Afin de maintenir la fiche complémentaire en position sur le connecteur embarque, la fiche complémentaire 200 présente un ergot mobile 210, prévu pour se déplacer transversalement à un axe principal longitudinal X de la fiche complémentaire. Pour un tel déplacement, la fiche complémentaire présente un bouton d'actionnement 220 placée en face supérieure de la fiche complémentaire, et relié à cet ergot par une tringlerie de sorte qu'une pression sur le bouton d'actionnement 220 génère un soulèvement de l'ergot 210 en écartement de l'axe principal X.

En position accouplée, l'ergot 210 vient se placer au delà d'un épaulement 110 de la fiche embarquée, lequel épaulement retient l'ergot à rencontre d'un déplacement de ce dernier dans la direction parallèle à l'axe X selon un mouvement de retrait de la fiche complémentaire 200. Aussi, lorsque le bouton d'actionnement n'est pas pressé par l'utilisateur, la fiche complémentaire est bloquée en position de coopération avec la fiche embarquée 100.

Ce verrouillage en position d'alimentation étant jugé d'une fiabilité non suffisante, le dispositif ici décrit présente en outre un élément de retenue 130 dont le rôle est de venir s'interposer sur le trajet de l'ergot mobile 210 a l'encontre d'un écartement de ce dernier par rapport a l'épaulement 110.

L'élément de retenue 130 est une lame montée en rotation sur un axe 135 traversant cette dernière en partie médiane. La lame 130 s'étend de part et d'autre de cet axe de rotation 135, par deux portions 137 et 138 ci-après appelée portion supérieure 137 et portion inférieure 138 de la lame.

La portion supérieure 137 de la lame 130 est reliée à un actionneur électrique 140. Plus précisément, une extrémité libre de cette portion supérieur 137 est reliée à un axe de sortie de l'actionneur électrique 140, lequel arbre de sortie est entraîné en coulissement longitudinal et déplace l'extrémité de portion supérieure de la lame, provoquant la rotation de la lame.

La portion inférieur 138 de la lame 130 présente son extrémité libre à proximité directe de l'ergot mobile 210, de sorte que dans deux positions de rotation de la lame, celle-ci vient s'interposer sur le trajet de l'ergot 210 en effacement, empêchant ainsi un écartement de celui-ci par rapport à l'épaulement 110. La lame 130 vient ainsi se placer de sorte que son extrémité libre se place en vis-à-vis de l'ergot 210 à l'encontre de son déplacement en effacement. Toutefois, dans un autre mode de réalisation, la lame 130 vient se positionner face à l'ergot 210 par un partie quelconque de la lame, par exemple par sa bordure latérale.

On notera que l'extrémité libre inférieure de la lame est effilée afin de ne présenter qu'un faible surface devant l'ergot 210, un collage par le gel étant rendu de ce fait moins probable.

Selon un mode de réalisation avantageux, on adopte un ressort bistable pour rappeler l'élément de retenue rotatif 130 dans ses deux positions extrémales respectivement effacée et active, ce qui produit un équilibrage en vibration et une diminution de la bruyance.

De par son déplacement en rotation, l'élément de retenue formé par la lame 130 est particulièrement robuste à un blocage intempestif, notamment un blocage par le gel ou par encrassage. De plus, l'effort devant être développé par l'actionneur 140 pour une telle rotation de la lame 130 est particulièrement faible, de telle sorte que l'actionneur 140 peut être un actionneur à très faible consommation électrique.

L'élement de retenue rotatif forme de plus un levier en rotation entre l'actionneur et la fiche externe, développant ainsi une force élevée au niveau de la fiche externe si nécessaire, afin de vaincre un éventuel blocage dû à la présence de glace à cet endroit. Une telle configuration en lever permet en outre d'adapter géométriquement la force développée à l'extrémité opposée à l'actionneur.

L'élément de retenue étant mobile en rotation transversalement à l'axe principal de la fiche externe, la fiche externe, maintenue en position d'alimentation par son enfichage, ne peut être forcée de l'extérieur afin de ramener l'élément de retenue en rotation vers sa position effacée pour un forçage en séparation de la fiche. La fiabilité s'en trouve améliorée.

De plus, la lame 130 venant ici s'interposer sur le trajet de l'ergot 210 en étant orientée en direction de ce dernier et de manière alignée avec la direction d'écartement de l'ergot 210, la lame exerce un force particulièrement robuste sur ce dernier sans s'exposer à un endommagement quelconque puisque les efforts de maintien en verrouillage en cas d'actionnement intempestif de l'ergot 210 sont repris par la lame 130 selon son axe propre. L'ergot 210 ne peut donc pas être forcé en écartement.

## Revendications

1. Fiche d'alimentation embarquée (100) dans un véhicule automobile pour l'alimentation de batteries de propulsion dudit véhicule automobile, comprenant
- des contacts exposés à un contactage extérieur,
- des moyens de coopération avec une fiche complémentaire (200) pour ledit contactage extérieur
- un élément de retenue (130) pour retenir la fiche complémentaire (200) en position d'alimentation du véhicule, ledit élément de retenue (130) étant mobile entre une position effacée où l'élément de retenue (130) autorise un désengagement de ladite fiche complémentaire (200) par rapport au véhicule et une position active où il s'oppose à un désengagement de ladite fiche complémentaire (200) par rapport au véhicule
- un actionneur pour entraîner l'élément de retenue entre ladite position effacée et ladite position active,
**caractérisée en ce que** ledit élément de retenue (130) est monté mobile en rotation sur le véhicule et l'actionneur entraîne l'élément de retenue (130) selon le mouvement de rotation lors dudit verrouillage de ladite fiche complémentaire (200) en position d'alimentation du véhicule.

2. Ensemble de connection d'alimentation de véhicule automobile pour l'alimentation de batteries de propulsion dudit véhicule automobile, comprenant une fiche embarquée (100) dans le véhicule automobile pour l'alimentation de batteries de propulsion dudit véhicule automobile et une fiche externe d'alimentation (200) complémentaire de ladite fiche embarquée (100) et destinée à être accouplée à ladite fiche embarquée, ladite fiche embarquée comprenant :
- des contacts exposés à un contactage extérieur,
- des moyens de coopération avec ladite fiche complémentaire pour ledit contactage extérieur,
- un élément de retenue (130) pour retenir ladite fiche complémentaire en position d'alimentation du véhicule, ledit élément de retenue étant mobile entre une position effacée où l'élément de retenue autorise un désengagement de ladite fiche complémentaire par rapport au véhicule et une position active où il s'oppose à un désengagement de ladite fiche complémentaire par rapport au véhicule,
- un actionneur (140) pour entraîner l'élément de retenue entre ladite position effacée et ladite position active, **caractérisé en ce que** ledit élément de retenue (130) est monté mobile en rotation sur le véhicule est l'actionneur entraîne l'élément de retenue (130) selon le mouvement de rotation lors dudit verrouillage de ladite fiche complémentaire (200) en position d'alimentation du véhicule.

3. Ensemble de connection selon la revendication 2, **caractérisé en ce que** ladite fiche complémentaire (200) présente un ergot (210) venant accrocher un épaulement (110) de ladite fiche embarquée, ledit ergot étant monté mobile sur ladite fiche complémentaire.

4. Ensemble de connection selon la revendication 2, **caractérisé en ce que** ladite fiche complémentaire présent un organe d'actionnement (220) couplé au dit ergot (210), de sorte qu'une sollicitation manuelle de l'élément d'actiolinement provoque un déplacement de l'ergot (210) en séparation de l'épaulement de la fiche embarquée, autorisant ainsi une désolidarisation de la fiche complémentaire par rapport à la fiche embarquée.

5. Ensemble de connection selon la revendication 3, **caractérisé en ce que** l'élément de retenue (130) est positionné de manière à se placer en obstacle d'un déplacement de l'ergot (210) et s'opposer ainsi à la séparation de ce dernier vis-à-vis de l'épaulement (110).

## Patentansprüche

1. Bordeigener Netzstecker (100) in einem Kraftfahrzeug zur Versorgung von Antriebsbatterien des Kraftfahrzeugs, umfassend:
- Kontakte, die für eine äußere Kontaktierung freigesetzt sind,
- Mittel zur Zusammenarbeit mit einem zusätzlichen Stecker (200) für die äußere Kontaktierung,
- ein Rückhaltelement (130), um den zusätzlichen Stecker (200) in der Versorgungsposition des Fahrzeugs zu halten, wobei das Rückhalteelement (130) zwischen einer gelöschten Position, in der das Rückhalteelement (130) eine Auslösung des zusätzlichen Steckers (200) mit Bezug auf das Fahrzeug ermöglicht, und einer aktiven Position bewegt werden kann, in der es sich einer Auslösung des zusätzlichen Steckers (200) mit Bezug auf das Fahrzeug widersetzt,
- einen Aktuator, um das Rückhalteelement zwischen der gelöschten Position und der aktiven Position anzutreiben,
**dadurch gekennzeichnet, dass** das Rückhalteelement (130) beweglich in Drehung auf dem Fahrzeug montiert ist und der Aktuator (130) gemäß der Drehbewegung bei der Verriegelung des zusätzlichen Steckers (200) in der Versorgungsposition des Fahrzeugs das Rückhalteelement antreibt.

2. Versorgungsverbindungseinheit eines Kraftfahrzeugs zur Versorgung von Antriebsbatterien des Kraftfahrzeugs, umfassend einen bordeigenen Stecker (100) im Kraftfahrzeug zur Versorgung von Antriebsbatterien des Kraftfahrzeugs und einen zusätzlichen externen Versorgungsstecker (200) des bordeigenen Steckers (100) und dazu ausgelegt, an den bordeigenen Stecker gekoppelt zu sein, wobei der bordeigene Stecker Folgendes umfasst:
- Kontakte, die für eine äußere Kontaktierung freigesetzt sind,
- Mittel zur Zusammenarbeit mit dem zusätzlichen Stecker für die äußere Kontaktierung,
- ein Rückhaltelement (130), um den zusätzlichen Stecker in der Versorgungsposition des Fahrzeugs zu halten, wobei das Rückhalteelement zwischen einer gelöschten Position, in der das Rückhalteelement eine Auslösung des zusätzlichen Steckers mit Bezug auf das Fahrzeug ermöglicht, und einer aktiven Position bewegt werden kann, in der es sich einer Auslösung des zusätzlichen Steckers mit Bezug auf das Fahrzeug widersetzt,
- einen Aktuator (140), um das Rückhalteelement zwischen der gelöschten Position und der aktiven Position anzutreiben, **dadurch gekennzeichnet, dass** das Rückhalteelement das Betätigungselement (130) beweglich in Drehung auf dem Fahrzeug montiert ist, und der Aktuator das Rückhalteelement (130) gemäß der Drehbewegung bei der Verriegelung des zusätzlichen Steckers (200) in der Versorgungsposition des Fahrzeugs antreibt.

3. Verbindungseinheit nach Anspruch 2, **dadurch gekennzeichnet, dass** der zusätzliche Stecker (200) einen Vorsprung (210) aufweist, der einen Absatz (110) des bordeigenen Steckers befestigt, wobei der Vorsprung beweglich auf dem zusätzlichen Stecker montiert ist.

4. Verbindungseinheit nach Anspruch 2, **dadurch gekennzeichnet, dass** der zusätzliche Stecker ein Betätigungsorgan (220) aufweist, das an den Vorsprung (210) gekoppelt ist, so dass eine manuelle Beanspruchung des Aktuators eine Verschiebung des Vorsprungs (210) durch die Trennung des Absatzes des bordeigenen Steckers hervorruft, wodurch eine Entkopplung des zusätzlichen Steckers mit Bezug auf den bordeigenen Stecker ermöglicht wird.

5. Verbindungseinheit nach Anspruch 3, **dadurch gekennzeichnet, dass** das Rückhalteelement (130) derart positioniert ist, dass es als Hindernis einer Verschiebung des Vorsprungs (210) angeordnet wird und sich so gegen die Trennung dieses Letzteren gegenüber dem Absatz (110) widersetzt.

## Claims

1. Power supply plug (100) on-board an automobile for powering batteries for the propulsion of said automobile, comprising
- contacts exposed to external contacts,
- means for engaging with a complementary plug (200) for said external contacts
- a holding element (130) for holding the complementary plug (200) in a vehicle-powering position, said holding element (130) being movable between a retracted position in which the holding element (130) enables said complementary plug (200) to be released from the vehicle and an operative position in which it prevents said complementary plug (200) from being released from the vehicle
- an actuator for moving the holding element between said retracted position and said operative position,
**characterised in that** said holding element (130) is rotably mounted on the vehicle and the actuator moves the holding element (130) according to the rotational movement during said locking of said complementary plug (200) in the vehicle-powering position.

2. Automobile power supply connection unit for powering batteries for the propulsion of said automobile, comprising an on-board plug (100) in the automobile for the powering of batteries for the propulsion of said automobile and an external power supply plug (200) that is complementary with said on-board plug (100) and intended to be coupled with said on-board plug, said on-board plug comprising:
- contacts exposed to external contacts,
- means for engaging with said complementary plug for said external contacts,
- a holding element (130) for holding said complementary plug in the vehicle-powering position, said holding element being movable between a retracted position in which the holding element enables said complementary plug to be released from the vehicle and an operative position in which it prevents said complementary plug from being released from the vehicle,
- an actuator (140) for moving the holding element between said retracted position and said operative position, **characterised in that** said holding element (130) is rotably mounted on the vehicle and the actuator moves the holding element (130) according to the rotational movement during said locking of said complementary plug (200) in the vehicle-powering position.

3. Connection unit according to claim 2, **characterised in that** said complementary plug (200) has a lug (210) hanging from a shoulder (110) of said on-board plug, with said lug being movable mounted on said complementary plug.

4. Connection unit according to claim 2, **characterised in that** said complementary plug has an actuating member (220) coupled to said lug (210), in such a way that a manual solicitation of the actuating element causes a displacement of the lug (210) as separation of the shoulder from the on-board plug, as such enabling the complementary plug to be disconnected from the on-board plug.

5. Connection unit according to claim 3, **characterised in that** the holding element (130) is positioned in such a way as to prevent a displacement of the lug (210) and as such prevent the separation of the latter from the shoulder (110).
